# EUROPEAN PATENT APPLICATION

(11) **EP 2 224 038 A1**
(43) Date of publication of application: **01.09.2010**
(21) Application number: 09275008.2
(22) Date of filing: 10.02.2009
(51) Int. Cl.: C23C 24/00, B22F 7/00

(54) **Method of fabricating an object**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A method of fabricating an object is disclosed. A first layer of powder is deposited onto a substrate in a configuration defining a first cross-section of the object, and is consolidated by laser irradiation. To fabricate the object, further layers of powder are then deposited onto the sintered first layer of powder to define further cross-sections of the object, and the further layers consolidated. A heat source is applied to the substrate prior to sintering the first layer in order to mitigate distortion of the substrate during fabrication of the object.

## Description

The present invention relates to a method of fabricating an object. More particularly, the invention relates to an improvement to an additive layer manufacturing process.

Additive layer manufacturing processes are known. These processes typically comprise the deposition of a layer of a powder onto a substrate; the powder being deposited in a configuration defining a first cross-section of an object; consolidating the layer, and then depositing and consolidating further layers of the powder, defining further layers of the object. The consolidation may be performed by a laser system. Thus, a structure is build up by the gradual addition of material. Additive layer manufacturing processes are advantageous in many circumstances because complex structures, which may be difficult to form using more traditional fabrication techniques, can be formed relatively easily, and because the process can be computer controlled, resulting in precise and accurate manufacturing.

A disadvantage of additive layer manufacturing processes is that, where a metallic powder and substrate are used, a large heat input is necessary in order to consolidate the powder. This heat input creates strong thermal gradients in the substrate onto which the object is fabricated. The substrate material, in the region near the deposited powder, will expand because of the heat input resulting from the laser irradiation. If the expansion is creates sufficient compressive stresses within the substrate material, compressive plastic yielding may result, and, correspondingly, on cooling of the substrate material once the heat source is removed, high residual tensile stresses will be created across the region in which powder is deposited, balanced by compressive residual stresses further away from that region. These stresses can result in significant unwanted distortion of the substrate material. It may not be desirable for the distortion to remain in the substrate, but correction of such distortion can be costly and time-consuming.

It is therefore an aim of the present invention to mitigate both distortion arising during additive layer fabrication processes, and the problems associated with such distortion. It is a further aim of the present invention to mitigate problems associated with residual tensile stresses created during fabrication by additive layer manufacturing.

In broad terms, the present invention resides in the concept of mitigating the effects of the strong thermal gradients created during sintering of a layer of powder by pre-heating at least a part of the substrate. Such preheating reduces the strong thermal gradients resulting from the sintering of the powder.

In accordance with one aspect of the present invention, there is provided a method of fabricating an object, the method comprising the steps of: (i) depositing a first layer of powder onto a substrate; the powder being deposited in a configuration defining a first cross-section of the object; (ii) consolidating the first layer of powder by heating the first layer of powder; (iii) depositing a further layer of the powder to define a further cross-section of the object, and consolidating the further layer of powder; and (iv) repeating step (iii) to fabricate the object; wherein a heat source is applied to the substrate prior to consolidating the first layer. It has been found that application of the heat source, prior to consolidation of the first layer, substantially mitigates the problem of distortion to the substrate material.

The heat source may also be applied during consolidation of the first layer, and during consolidation at least some of the further layers. It has been found that application of the heat source during only the deposition and consolidation of the first few layers is sufficient to substantially mitigate distortion to the substrate. It is thought that, as the object is grown in the direction perpendicular to the substrate, by the addition of further layers, the amount of heat transmitted to the substrate by the consolidation process decreases, so that the consolidation process no longer induces such strong thermal gradients in the substrate.

The heat source may be applied locally to the area on the substrate defining the first cross-section. It has been found that local application of heat is sufficient to substantially mitigate distortion of the substrate. Such local application of heat results in a more efficient fabrication process.

The powder may be deposited by ejection from a powder deposition nozzle, in which case the nozzle is configured such that powder is ejected in a plurality of directions substantially symmetrically disposed about an axis of the nozzle so as to converge to a region on the substrate, or on one of the first or further layers of consolidated powder, and the nozzle is moveable in the plane of the substrate. The region on the substrate may be substantially point-like. The nozzle may be further moveable in the direction perpendicular to the substrate. This enables the object to be grown in the direction perpendicular to the substrate.

The steps of consolidating the first and further layers of powder may comprise fully consolidating the first and further layers of powder. Alternatively, the steps of consolidating the first and further layers of powder may comprise sintering the first and further layers of powder. The selection between complete consolidation and sintering be made in dependence on the particular powder material, or on the properties of the structure it is desired to fabricate. In one embodiment, a stainless steel powder is used, and is fully consolidated.

The powder may be consolidated at substantially the same time as it is deposited. For example, a laser may be used to consolidate the first and further layers of powder. Conveniently, a first output of the laser may be transmitted through a first optical fibre to first focussing optics mounted on the deposition nozzle, which first focussing optics are arranged to focus the output of the laser substantially where the powder converges on the substrate, or on one of the first or further layers of consolidated powder.

In one embodiment of the invention a second output of the laser provides the heat source. The second output of the laser may be transmitted through a second optical fibre to second focussing optics mounted on the deposition nozzle, which second focussing optics are arranged such that the second output of the laser irradiates an area of the substrate proximal to the region on the substrate where the powder converges. The area may have a diameter in the range between 5 mm and 25 mm, more particularly a diameter of 10 mm. Thus, one laser can be used as both the heat source for preheating the substrate, and for consolidation of the powder as it is deposited.

In an alternative embodiment, the heat source comprises an electrical heater in contact with the substrate. The electrical heater may be clamped to the substrate. Intimate contact between the substrate and the heater can be ensured by such clamping, so that efficient heat transfer between the heater and the substrate is achieved. The electrical heater may be heated to a temperature of approximately 200°C prior to consolidating the first layer. The heater may then be switched off immediately prior to consolidation of the first layer. The electrical heater may have a width in the range between 5 mm and 25 mm, more particularly a width of 10 mm.

Preferred embodiments of the invention will now be described, by way of example only, and with reference to the accompanying drawings in which:
Figure 1 is a schematic diagram illustrating a method in accordance with a first embodiment of the present invention;
Figure 2 is a photographic illustration of the apparatus used to perform the method illustrated in Figure 1;
Figure 3 is a photographic illustration of objects formed with and without the benefits of the first embodiment of the invention; and
Figure 4 is a schematic diagram illustrating a method in accordance with a second embodiment of the invention.

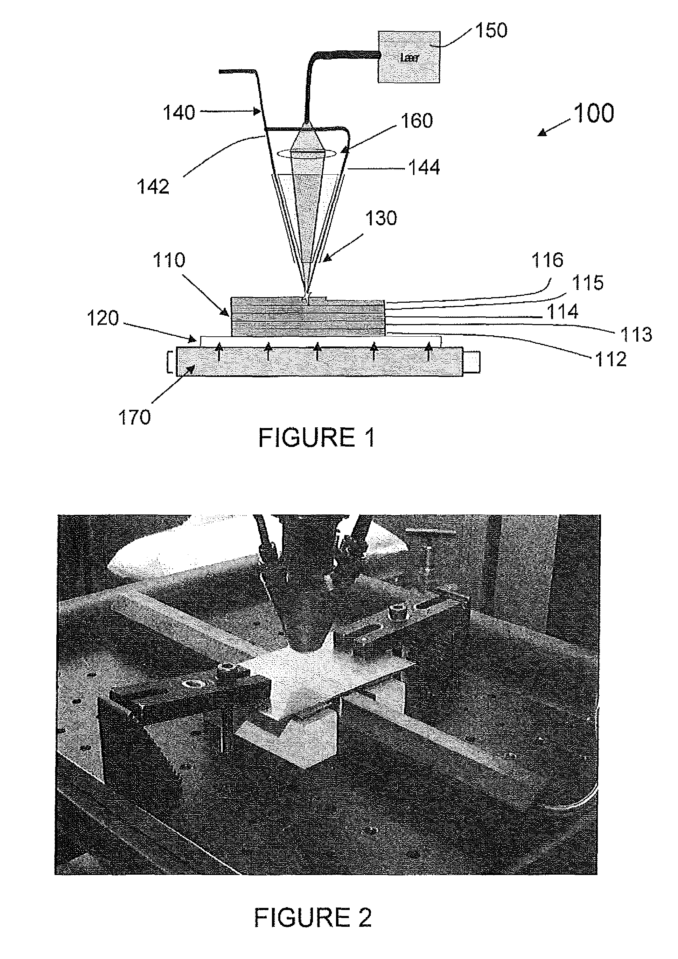

A method in accordance with a first embodiment of the present invention is schematically illustrated in Figure 1. Apparatus 100 is shown in use to build an object 110, by successive fabrication of layers 112, 113, 114, 115, 116 onto substrate 120. Apparatus 100 comprises deposition nozzle 130, powder delivery system 140, and laser 150. Metallic powder is ejected from deposition nozzle 130 onto substrate 120, or onto a pre-existing layer of the object 110, in a region onto which laser 150 is focussed. Thus, the powder is sintered as it is deposited. In the present embodiment, the powder is stainless steel 316 powder, obtained from the company Höganäs (Great Britain) Ltd, having a place of business at Munday Works, 58/66 Morley Road, Tonbridge, Kent, United Kingdom. The powder grains have a diameter between 36 µm and 106 µm. Powder delivery system 140 delivers powder at a rate of three grams per minute through the deposition nozzle 130, along three delivery lines disposed symmetrically around the deposition nozzle 130. In Figure 1, only two of these delivery lines, labelled with reference numerals 142 and 144, are shown for clarity. Deposition nozzle 130 is movable around the substrate so that objects of arbitrary shape can be constructed. Deposition nozzle 130 is also movable in the direction perpendicular to the substrate so that objects of arbitrary height can be fabricated. Laser 150 is a Nd:YAG laser emitting a 200 W continuous wave beam at a wavelength of 1064nm. The beam is transmitted to delivery nozzle 130 by an optical fibre, and focussed by lens 160, at approximately the point at which the two jets of powder emanating from the three delivery lines intersect, to a spot size of 600 µm.

In the embodiment shown in Figure 1, it is desired to build a vertical wall-like structure on the substrate 120. In order to fabricate such a structure, the deposition nozzle 130 is moved back and forth along a line on substrate 120. The line defines the cross-section of the wall in the plane of the substrate. The deposition nozzle moves at 5 mm/s along the line, and continues to move back and forth until the desired number of layers has been built. Substrate 120, in the present embodiment, is a stainless steel 316L sample sheet, 100 mm long, 70 mm wide and 1.5 mm thick.

A heat source is provided beneath the substrate 120. As is most clearly shown in Figure 2, heat source 120 is a bar heater onto which the substrate is clamped by clamps 210. The heat source is in contact with the underside of substrate 120 along the line along which the wall is to be fabricated, and for a width of 10 mm. Prior to the application of the laser 150 to consolidate any of the powder, the bar heater is heated to 200°C. Once the heater has reached 200°C, fabrication is commenced as is described above. By locally heating the substrate prior to the fabrication of the object, the strength of the thermal gradients created by the fabrication process is significantly reduced. The strength of these thermal gradients, in prior-known such fabrication processes, leads to the formation of residual stresses in the substrate that result in substrate distortion. By reducing the strength of the thermal gradients, distortion is significantly reduced.

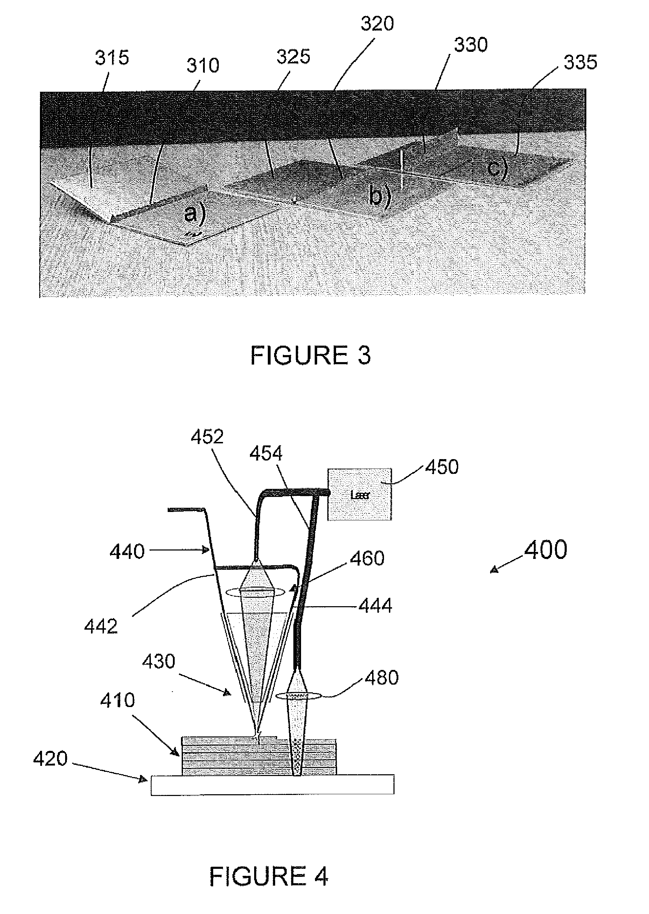

A number of structures formed using an additive layer manufacturing process, such as that described above, are shown in Figure 3. Figure 3 is a photograph of three structures formed on three different substrates. Structure 310, on substrate 315, was formed without the prior application of heat to the substrate. Structure 310 is formed of five layers of deposited and consolidated powder. Distortion in the substrate is clearly visible. Structures 320 and 330, formed on substrates 325 and 335 respectively, were formed in accordance with the method described above. Thus, substrates 325 and 335 were heated prior to the formation of the structures 320 and 330. No distortion to the substrates 325 and 335 is visible in Figure 3. Structure 320 comprises five layers of consolidated powder, whilst structure 330 comprises twenty layers of consolidated powder.

A method in accordance with a second embodiment of the invention is illustrated in Figure 4. The method of the second embodiment is similar in effect to that of the first embodiment, and differs from the first embodiment only in the manner in which heat is applied to the substrate prior to the deposition and consolidation of powder onto the substrate. In Figure 4, features already illustrated in Figure 1 and described above are given the identical reference numerals, but incremented by three hundred. These features are not described further. As is schematically indicated in Figure 4, laser source 450 is used not only to consolidate the powder as it is deposited, but also to pre-heat the substrate. Two outputs are therefore provided from laser 450, one on optical fibre 452, and one on optical fibre 454. A first laser output directed along fibre 452 is used to consolidate the powder, as in the first embodiment described above. Laser radiation transmitted by fibre 452 is focussed by lens 460 as described above with reference to the first embodiment. Laser radiation is transmitted along fibre 454 during the deposition of the first few layers of the structure 410, when distortion to the substrate may occur. Laser radiation transmitted along the fibre 454 is focussed by lens 480 such that a spot of diameter approximately 10 mm is formed on the substrate in a region just in front of the deposition nozzle 430. The laser power is adjusted to vary the spot temperature such that an appropriate heat input is obtained. The spot temperature can be checked using an appropriate thermometer, such as a thermocouple, prior to commencing the additive layer manufacturing process. A temperature of 200°C, as above, is preferred. The substrate is heated by the laser radiation in the region of the spot 485 prior to the build of the structure 410, so that distortion in the substrate is mitigated. The mechanism of distortion mitigation is as described above with reference to the first embodiment, except in that the heat input is on the same side of the substrate as the structure being formed. This has the advantage that access to the rear of the substrate can be difficult where the structure being formed is, for example, on an aircraft.

It will be noted that the above-described embodiments are in all respects exemplary. Modifications to the above-described embodiments, and variations thereof, are possible without departing from the scope of the invention, which is defined in the accompanying claims. Such variations and modifications will be apparent to those skilled in the art. For example, whilst, in the above, it has been described to use a deposition nozzle having three lines from which powder can be ejected, it will be appreciated that other nozzle designs are possible, such as nozzles that provide a conical flow of powder directed as described above. Other types of powder starting material may be used; and it will be possible to use any laser operable to provide a sufficient amount of heat for consolidation. It will be noted that the laser could be arranged either to fully consolidate the powder, or to sinter the powder, by variation of the power focussed onto the powder.

The parameters of the heat source used to preheat the substrate can also vary whilst still mitigating distortion. For example, the size of the zone on the substrate heated by the heat source may vary: it is expected that distortion mitigation would still be achieved if the entire substrate were to be preheated. It will be immediately apparent to the skilled reader that the size of the zone could also be reduced to a minimum that can be determined by trial and error for a given substrate, since, for example, the thickness of the substrate will affect the amount of distortion created by the additive layer manufacturing process. The temperature to which the substrate is heated can also be varied. It will be appreciated that the empirical measurements on any particular substrate will be necessary, since the properties of the substrate will affect the amount of distortion that occurs.

Finally, it is noted that the skilled reader will appreciate that any feature described above in relation to any one embodiment may be used alone, or in combination with other features described, and may also be used in combination with one or more features of any other of the embodiments, or any combination of any other of the embodiments.

## Claims

1. A method of fabricating an object, the method comprising the steps of:
(i) depositing a first layer of powder onto a substrate; the powder being deposited in a configuration defining a first cross-section of the object;
(ii) consolidating the first layer of powder by heating the first layer of powder;
(iii) depositing a further layer of the powder to define a further cross-section of the object, and consolidating the further layer of powder; and
(iv) repeating step (iii) to fabricate the object;
wherein a heat source is applied to the substrate prior to consolidating the first layer.

2. A method as claimed in claim 1, wherein the heat source is applied during consolidation of the first layer, and during consolidation at least some of the further layers.

3. A method as claimed in claim 1 or claim 2, wherein the heat source is applied locally to the area on the substrate defining the first cross-section.

4. A method as claimed in any preceding claim, wherein the powder is deposited by ejection from a powder deposition nozzle, the nozzle being configured such that powder is ejected in a plurality of directions substantially symmetrically disposed about an axis of the nozzle so as to converge to a region on the substrate, or on one of the first or further layers of consolidated powder, and the nozzle being moveable in the plane of the substrate.

5. A method as claimed in claim 4, wherein the nozzle is further moveable in the direction perpendicular to the substrate.

6. A method as claimed in claim 4 or claim 5, wherein the region on the substrate is substantially point-like.

7. A method as claimed in any one of the preceding claims wherein the steps of consolidating the first and further layers of powder comprise fully consolidating the first and further layers of powder.

8. A method as claimed in any one of the preceding claims, wherein a laser is used to consolidate the first and further layers of powder.

9. A method as claimed in claim 8 when dependent on any one of claims 4 to 6, wherein a first output of the laser is transmitted through a first optical fibre to first focussing optics mounted on the deposition nozzle, which first focussing optics are arranged to focus the output of the laser substantially where the powder converges on the substrate, or on one of the first or further layers of consolidated powder.

10. A method as claimed in claim 8 or claim 9, wherein a second output of the laser provides the heat source.

11. A method as claimed in claim 10, wherein the second output of the laser is transmitted through a second optical fibre to second focussing optics mounted on the deposition nozzle, which second focussing optics are arranged such that the second output of the laser irradiates an area of the substrate proximal to the region on the substrate where the powder converges.

12. A method as claimed in claim 11 wherein the area has a diameter in the range between 5 mm and 25 mm, more particularly a diameter of 10 mm.

13. A method as claimed in any one of claims 1 to 9, wherein the heat source comprises an electrical heater in contact with the substrate.

14. A method as claimed in claim 13, wherein the electrical heater is heated to a temperature of approximately 200 °C prior to consolidating the first layer.

15. A method as claimed in claim 13 or claim 14, wherein the electrical heater has a width in the range between 5 mm and 25 mm, more particularly a width of 10 mm.
